# EUROPEAN PATENT APPLICATION

(11) **EP 4 257 864 A1**
(43) Date of publication of application: **11.10.2023**
(21) Application number: 21913317.0
(22) Date of filing: 09.10.2021
(51) Int. Cl.: F16M 13/02, F16M 11/04, F16B 2/06, H01Q 1/12, H01Q 3/06

(54) **FIXATION DEVICE FOR FIXING COMMUNICATION DEVICE AND COMMUNICATION APPARATUS**

(30) Priority: 31.12.2020 CN 202011626240
(71) Applicant: ZTE Corporation, Shenzhen, Guangdong 518057 (CN)
(72) Inventor: ZHANG, Gongzhe, Shenzhen, Guangdong 518057 (CN); JIANG, Yu, Shenzhen, Guangdong 518057 (CN); ZHAO, Xifeng, Shenzhen, Guangdong 518057 (CN); LI, Nanfang, Shenzhen, Guangdong 518057 (CN)
(74) Representative: Osterhoff, Utz
(86) International application number: PCT/CN2021/122868
(87) International publication number: WO 2022/142572

(57) **Abstract**

Disclosed is a fixing device for fixing a communication device, including an upper mounting member (11), a lower mounting member (12), and at least one limiting mechanism (13) fixed to the upper mounting member (11) and/or the lower mounting member (12); the lower mounting member (12) including a fixing portion (123) fixed to the lower end of the communication device and a hinge portion (122) hinged to the fixing portion; and the limiting mechanism (13) configured to limit the fixing portion (123) from continuing to rotate relative to the hinge portion (122) in response to that the upper mounting member (11) is not fixedly connected to the communication device and the fixing portion (123) rotates a preset angle relative to the hinge portion (122) along a preset path, the preset angle is greater than 0°and less than 140°. A communication apparatus is also disclosed.

## Description

### CROSS-REFERENCE TO RELATED APPLICATIONS

This application claims priority to Chinese Patent Application No. 202011626240.4, filed on December 31, 2020, the entire contents of which are incorporated herein by reference.

### TECHNICAL FIELD

The embodiments of the present application relate to the field of communication devices, and in particular to a fixing device for fixing a communication device and a communication apparatus.

### BACKGROUND

With the rapid development of communication technology, the communication device is applied widely. Based on the propagation characteristics of wireless communication of the communication device, the communication device is widely arranged on the roofs of buildings, high towers, street lights and other outdoor high places. Currently, the upper and lower ends of the communication device are fixed on the roofs of buildings, high towers, street lights and other outdoor high places through the upper mounting member and the lower mounting member of the fixing device.

However, when the upper mounting member for fixing the communication device cannot be fixedly connected to the communication device, the communication device is affected by its own gravity to rotate relative to the lower mounting member until the communication device is collided, and the communication device will transfer the impact force generated by the collision to the lower mounting member, which is easy to cause that the lower mounting member cannot be fixedly connected to the communication device, causing the communication device to fall from a height.

### SUMMARY

The embodiment of the present application provides a fixing device for fixing a communication device, including: an upper mounting member fixed to an upper end of the communication device, a lower mounting member fixed to a lower end of the communication device and mounted below the upper mounting member, and at least one limiting mechanism fixed to the upper mounting member and/or the lower mounting member; the lower mounting member comprising a fixing portion fixed to the lower end of the communication device and a hinge portion hinged to the fixing portion; and the limiting mechanism configured to limit the fixing portion from continuing to rotate relative to the hinge portion in response to that the upper mounting member is not fixedly connected to the communication device and the fixing portion rotates a preset angle relative to the hinge portion along a preset path, wherein the preset angle is greater than 0°and less than 140°.

The embodiment of the present application also provides a communication apparatus, including the fixing device for fixing the communication device above, and a communication device fixed to the fixing device; the upper mounting member is fixed to the upper end of the communication device, the lower mounting member is fixed to the lower end of the communication device, and the lower mounting member is located below the upper mounting member in a direction of gravity.

### BRIEF DESCRIPTION OF THE DRAWINGS

FIG. 1 is a schematic structural view of a fixing device when an upper mounting member is fixedly connected to a communication device according to a first embodiment of the present application.
FIG. 2 is a schematic structural view of the fixing device when the upper mounting member is fixedly connected to the communication device according to a second embodiment of the present application.
FIG. 3 is a schematic structural view of the fixing device when the upper mounting member is fixedly connected to the communication device according to a third embodiment of the present application.
FIG. 4 is a schematic structural view of the fixing device when the upper mounting member is not fixedly connected to the communication device according to a third embodiment of the present application.
FIG. 5 is a schematic structural view of the fixing device when the upper mounting member is fixedly connected to the communication device according to a fourth embodiment of the present application.
FIG. 6 is a schematic structural view of an upper mounting member when the upper mounting member is not fixedly connected to the communication device according to a fourth embodiment of the present application.
FIG. 7 is a schematic structural view of the fixing device when the upper mounting member is fixedly connected to the communication device according to a fifth embodiment of the present application.
FIG. 8 is a schematic structural view of the communication apparatus when the upper mounting member is not fixedly connected to the communication device according to a sixth embodiment of the present application.

### DETAILED DESCRIPTION OF THE EMBODIMENTS

The main purpose of the embodiment of the present application is to propose a fixing device for fixing a communication device and a communication apparatus, which can avoid that the upper mounting member for fixing the communication device cannot be fixedly connected to the communication device when the upper mounting member for fixing the communication device is not fixedly connected to the communication device.

In order to make the purpose, technical solutions and advantages of the embodiments of the present application clearer, each embodiment of the present application will be described in detail below in conjunction with the drawings. However, those skilled in the art can understand that in each embodiment of the present application, many technical details are presented to enable the reader to better understand the present application. However, even without these technical details and various variations and modifications based on each of the following embodiments, the technical solutions protected by the present application can be realized. The following embodiments are divided for the convenience of description and shall not constitute any limitation to the specific implementation of the present application, and each embodiment can be combined and referenced to each other without contradiction.

A first embodiment of the present application relates to a fixing device for fixing a communication device, the fixing device is provided with an upper mounting member fixed to an upper end of the communication device, a lower mounting member fixed to a lower end of the communication device and mounted below the upper mounting member, and a limiting mechanism fixed to the lower mounting member. The lower mounting member includes a fixing portion fixed to the lower end of the communication device and a hinge portion hinged to the fixing portion. The limiting mechanism is configured to limit the fixing portion from continuing to rotate relative to the hinge portion when the upper mounting member is not fixedly connected to the communication device and the fixing portion rotates a preset angle relative to the hinge portion along a preset path. The preset angle is greater than 0°and less than 140°, so that when the upper mounting member is not fixedly connected to the communication device and the fixing portion rotates the preset angle relative to the hinge portion, a rotation angle of the fixing portion relative to the hinge portion is reduced, to reduce the impact force transferred by the communication device to the lower mounting member, to avoid that the lower mounting member cannot be fixedly connected to the communication device under a large impact force.

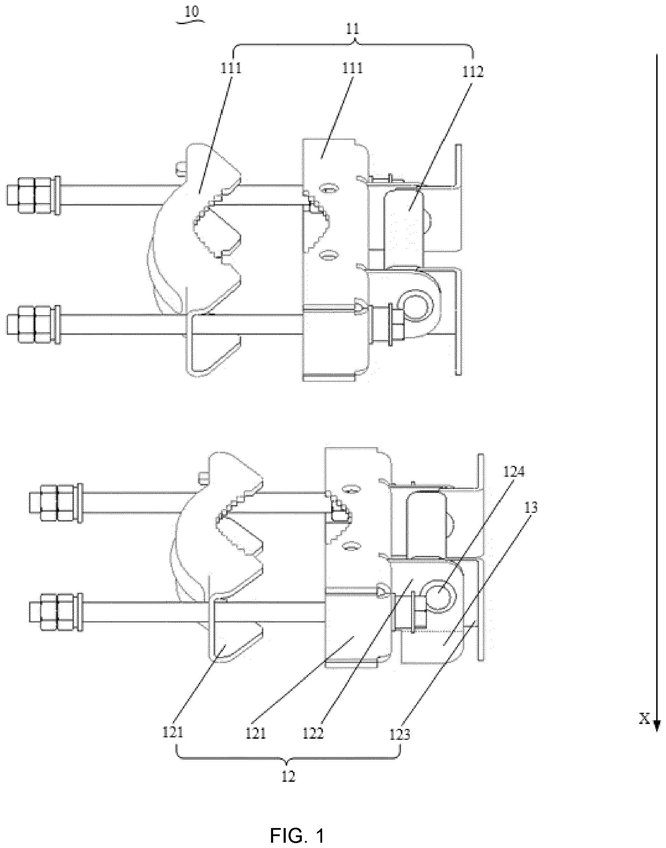

Referring to FIG. 1, the fixing device 10 for fixing a communication device of the embodiment includes an upper mounting member 11, a lower mounting member 12, and a limiting mechanism 13.

In this embodiment, the fixing device 10 is configured to fix the communication device to a holding bar. Specifically, the upper mounting member 11 includes two opposite first abutting members 111 against the holding bar, and a connection portion 112 fixed to the upper end of the communication device and to one of the two first abutting members 111. The lower mounting member 12 includes two opposite second abutting members 121 against the holding bar, and a hinge portion 122 fixed to one of the two second abutting members 121, and a fixing portion 123 fixed to the lower end of the communication device and hinged to the hinge portion 122. During installation, the holding bar is placed between the two second abutting members 121 and a distance between the two second abutting members 121 is reduced to fix the lower mounting member 12 to the holding bar, and then the holding bar is placed between the two first abutting members 111 and a distance between the two first abutting members 111 is reduced to fix the upper mounting member 11 to the holding bar, and finally the upper end of the communication device is fixed to the connection portion 112 and the lower end of the communication device is fixed to the fixing portion 123.

In addition, it should be noted that in other alternative embodiments, the fixing device 10 may also be configured to fix the communication device on the roof of a building or tower and other poles or walls at outdoor high places. It should be noted that when the communication device is fixed to a wall, the first abutting member 111 and second abutting member 121 suitable for being fixed to the pole may be replaced with other mounting seats suitable for mounting to the wall accordingly. For example, in one embodiment, the upper mounting member includes a first mounting seat fixed to the roof of the building and a connection portion fixed to the upper end of the communication device and fixed in the first mounting seat. The lower mounting member includes a second mounting seat fixed on the roof of the building, and a hinge portion fixed to the second mounting seat, and a fixing portion fixed to the lower end of the communication device and hinged to the hinge portion. During installation, the first mounting seat and the second mounting seat are fixed in turn to the roof of the building to fix the upper mounting member and the lower mounting member, and then the upper end of the communication device and the lower end of the communication device are fixed to the connection portion and the fixing portion in turn.

When the upper mounting member 11 cannot be fixedly connected to the communication device and the fixing portion 123 rotates relative to the hinge portion 122 along a preset path, the limiting mechanism 13 abuts against the fixing portion 123, the hinge portion 122, or the lower end of the communication device to limit the fixing portion 123 from continuing to rotate relative to the hinge portion 122, the preset path is a moving path of the fixing portion 123 when the upper mounting member 11 cannot be fixedly connected to the communication device and the fixing portion 123 rotates the preset angle relative to the hinge portion 122.

In the embodiment, the limiting mechanism 13 is a bending portion provided on the hinge portion 122 and provided in the preset path as shown in FIG. 1, specifically, the limiting mechanism 13 is a bending portion projecting and extending from the hinge portion 122 in a direction (i.e., X as shown) away from the upper mounting member 11. In the embodiment, the hinge portion 122 and the fixing portion 123 are provided with through holes, and the pivot 124 passes through the through holes of the hinge portion 122 and the fixing portion 123 in turn, such that the hinge portion 122 is hinged to the fixing portion 123. When the upper mounting member 11 cannot be fixedly connected with the communication device and the fixing portion 123 rotates relative to the hinge portion 122 along the preset path, a side of the fixing portion 123 that is far from the upper mounting member 11 abuts against the limiting mechanism 13 (i.e., the bending portion) to limit the fixing portion 123 from continuing to rotate relative to the hinge portion 122.

In the embodiment, the limiting mechanism 13 is integrally formed with the hinge portion 122. Of course, in other alternative embodiments, the limiting mechanism 13 may be fixed to the hinge portion 122 or the second abutting member 121 by other fixing methods (e.g., welding, screwing), so that when the upper mounting member 11 cannot be fixedly connected with the communication device and the fixing portion 123 rotates relative to the hinge portion 122, the limiting mechanism 13 abuts against the fixing portion 123 to limit the fixing portion 123 from continuing to rotate relative to the hinge portion 122. It should be noted that in another embodiment, when the upper mounting member 11 cannot be fixedly connected with the communication device and the fixing portion 123 rotates relative to the hinge portion 122, the limiting mechanism 13 can abut against the lower end of the communication device to limit the fixing portion 123 from continuing to rotate relative to the hinge portion 122.

In the embodiment, when the upper mounting member 11 cannot be fixedly connected with the communication device and the fixing portion 123 rotates the preset angle relative to the hinge portion 122, the limiting mechanism 13 limits the fixing portion 123 from continuing to rotate relative to the hinge portion 122, the preset angle is greater than 0°and less than 60°, so that the fixing portion 123 can rotate by a smaller angle relative to the hinge portion 122, which can further reduce the impact force transferred by the communication device to the lower mounting member 12, thus avoiding that the lower mounting member 12 cannot be fixedly connected to the communication device. In the embodiment, when the upper mounting member 11 cannot be fixedly connected with the communication device and the fixing portion 123 rotates 20°relative to the hinge portion 122, the limiting mechanism 13 limits the fixing portion 123 from continuing to rotate relative to the hinge portion 122.

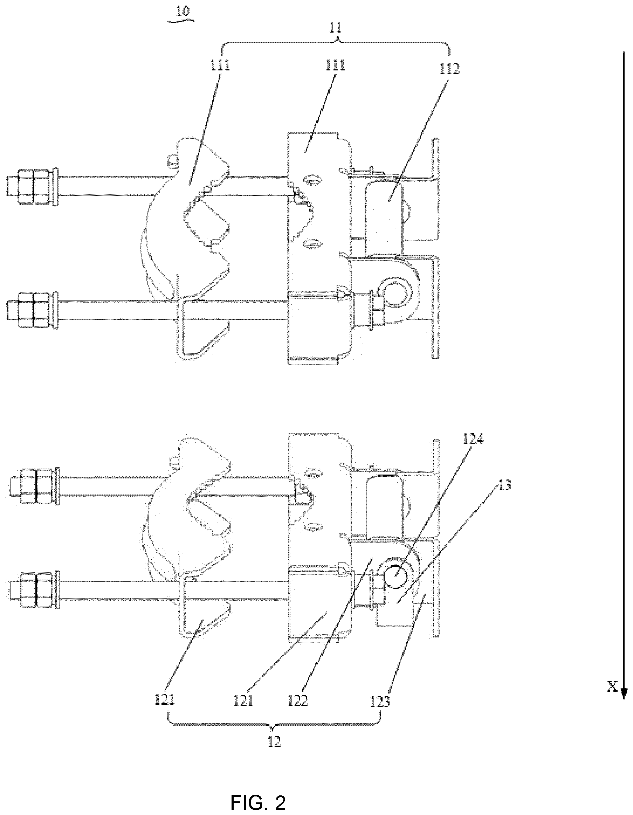

Referring to FIG. 2, a second embodiment of the present application relates to a fixing device 10 for fixing the communication device. The main difference between the second embodiment and the above first embodiment of the present application is that the limiting mechanism 13 is a spacer that is fixed at a hinge joint of the fixing portion 123 with the hinge portion 122 and is provided in a preset path.

Specifically, the hinge portion 122, the fixing portion 123, and the limiting mechanism 13 each is provided with a through hole, and the pivot 124 passes through the through holes in the limiting mechanism 13, the hinge portion 122, and the fixing portion 123 in turn, so that the hinge portion 122 is hinged to the fixing portion 123, and the limiting mechanism 13 is fixed at the hinge joint of the hinge portion 122 with the fixing portion 123.

The limiting mechanism 13 extends from the hinge joint of the hinge portion 122 with the fixing portion 123 in a direction (i.e., X as shown) away from the upper mounting member 11, so that when the upper mounting member 11 cannot be fixedly connected with the communication device and the fixing portion 123 rotates relative to the hinge portion 122 along the preset path, the fixing portion 123 abuts against the limiting mechanism 13 (i.e., the spacer) to limit the fixing portion 123 from continuing to rotate relative to the hinge portion 122.

In the embodiment, the limiting mechanism 13 is a spacer that is fixed at the hinge joint of the fixing portion 123 with the hinge portion 122. Of course, in other alternative embodiments, the limiting mechanism 13 may be other components (e.g., a rod), and in addition, the limiting mechanism 13 may be fixed at the hinge joint of the fixing portion 123 with the hinge portion 122 by other fixing methods (e.g., welding).

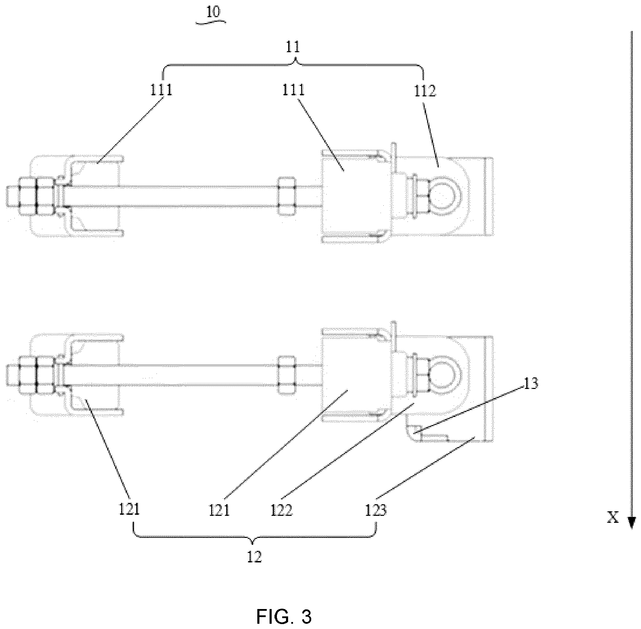

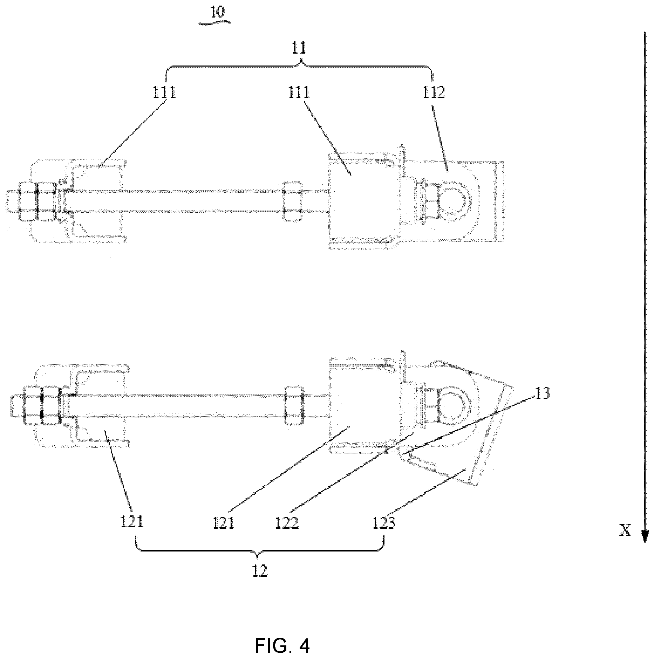

Referring to FIGS. 3 and 4, a third embodiment of the present application relates to a fixing device 10 for fixing a communication device. The main difference between the third embodiment and the above first embodiment of the present application is that the limiting mechanism 13 is a protrusion fixed to the fixing portion 123 and provided in the preset path.

In the embodiment, when the upper mounting member 11 is valid, the limiting mechanism 13 is located on a side of the fixing portion 123 away from the upper mounting member 11, when the upper mounting member 11 cannot be fixedly connected with the communication device and the fixing portion 123 rotates relative to the hinge portion 122 along the preset path, the limiting mechanism 13 abuts against a lower edge of the hinge portion 122 (below X as shown) to limit the fixing portion 123 from continuing to rotate relative to the hinge portion 122.

In the embodiment, the limiting mechanism 13 is integrally formed with the fixing portion 123. Of course, in other alternative embodiments, the limiting mechanism 13 may be fixed to the fixing portion 123 or to the lower end of the communication device by other fixing methods (e.g., welding, screwing). In one embodiment, the limiting mechanism 13 may also be a component fixed to the communication device alone, so that when the upper mounting member 11 cannot be fixedly connected with the communication device and the fixing portion 123 rotates relative to the hinge portion 122, the limiting mechanism 13 abuts against the hinge portion 122 or other components to limit the fixing portion 123 from continuing to rotate relative to the hinge portion 122.

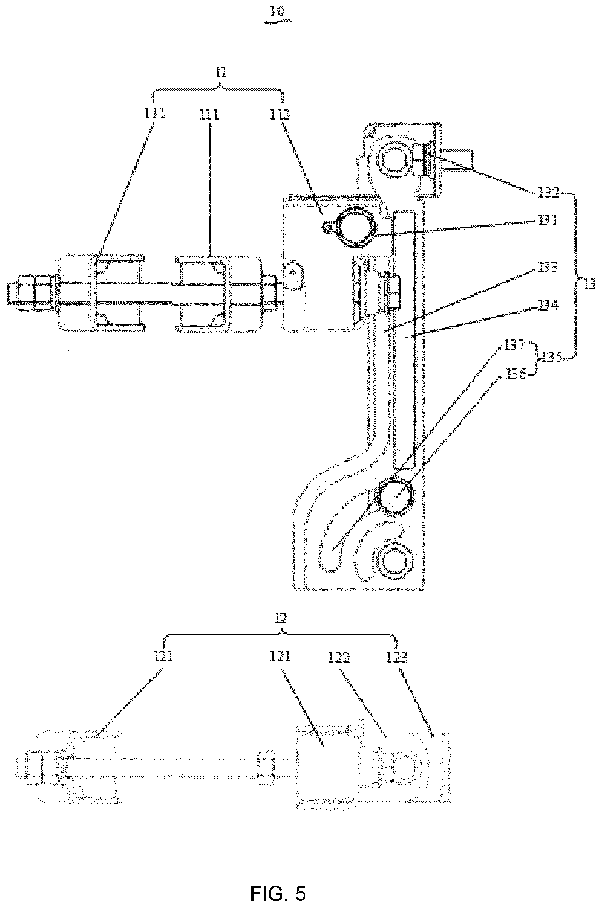

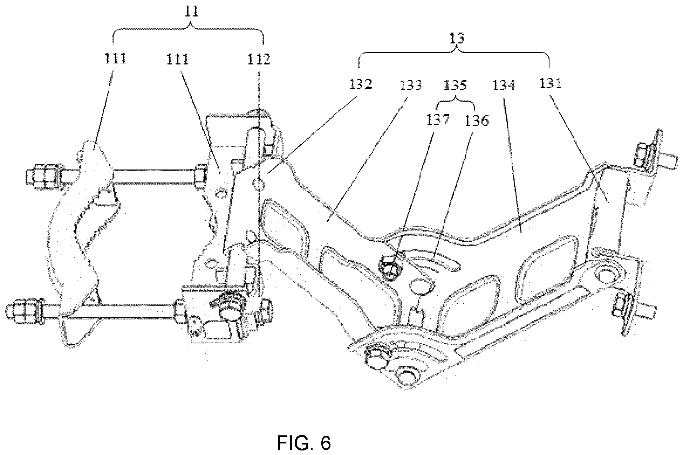

Referring to FIG. 5 and FIG. 6, a fourth embodiment of the present application relates to a fixing device 10 for fixing a communication device, and the main difference between the fourth embodiment and above the first embodiment of the present application is that the limiting mechanism 13 is a folding member, and the limiting mechanism 13 includes a first fixing end 131 fixed to the upper mounting member 11 and a second fixing end 132 fixed to the upper end of the communication device. After the upper mounting member 11 cannot be fixedly connected with the communication device, the fixing portion 123 rotates with the communication device relative to the hinge portion 122 under the drive of the gravity of the communication device, and at this time, the folded limiting mechanism 13 gradually expands under the drive of the upper end of the communication device. During the expansion of the limiting mechanism, a distance between the upper end of the communication device and the upper mounting member 11 increases gradually. When the limiting mechanism 13 is fully unfolded, since the first fixing end 131 is fixed to the upper mounting member 11 and the second fixing end 132 is fixed to the upper end of the communication device, so that the limiting mechanism 13 can pull the upper end of the communication device, to limit the fixing portion 123 and the communication device fixed to the fixing portion 123 from continuing to rotate relative to the hinge portion 122.

In the embodiment, the limiting mechanism 13 includes a first hinge arm 133 and a second hinge arm 134, an end of the first hinge arm 133 is a first fixing end 131, another end of the first hinge arm 133 is hinged to an end of the second hinge arm 134, and another end of the second hinge arm 134 is a second fixing end 132. When the limiting mechanism 13 is folded, the first hinge arm 133 rotates relative to the second hinge arm 134, so that a distance between the first fixing end 131 and the second fixing end 132 decreases; when the upper mounting member 11 cannot be fixedly connected to the communication device and the fixing portion 123 rotates relative to the hinge portion 122, the first hinge arm 133 rotates relative to the second hinge arm 134, so that the distance between the first fixing end 131 and the second fixing end 132 increases, and after the limiting mechanism 13 is fully unfolded, the limiting mechanism 13 pulls the upper end of the communication device to limit the fixing portion 123 from continuing to rotate relative to the hinge portion 122.

In the embodiment, as shown in FIG. 6, the limiting mechanism 13 also includes a positioning portion 135 provided on the first hinge arm 133 and the second hinge arm 134, the positioning portion 135 includes a positioning axis 136 provided on the first hinge arm 133 and a circular arc-shaped slotted hole 137 provided on the second hinge arm 134. A center of a circle of the circular arc-shaped slotted hole 137 is located at a hinge joint of the first hinge arm 133 with the second hinge arm 134, the positioning axis 136 is slidably fixed in the circular arc-shaped slotted hole 137, so that when the first hinge arm 133 rotates relative to the second hinge arm 134 (i.e., when the upper mounting member 11 cannot be fixedly connected with the communication device, the fixing portion 123 rotates relative to the hinge portion 122, and the limiting mechanism is unfolded), the positioning axis 136 slides in the circular arc-shaped slotted hole 137. When the positioning axis 136 abuts against the end of the circular arc-shaped slotted hole 137, the positioning portion 134 limits a rotation of the first hinge arm 133 relative to the second hinge arm 134.

It should be noted that in other alternative embodiments, the positioning portion 135 may also be provided on the first hinge arm 133 or the second hinge arm 134, as long as the positioning portion 135 can limit the rotation of the first hinge arm 133 relative to the second hinge arm 134 after the first hinge arm 133 rotates relative to the second hinge arm 134, e.g., the positioning portion 135 is a positioning member (not shown) provided on the first hinge arm 133, and after the first hinge arm 133 rotates relative to the second hinge arm 134, the positioning portion 135 abuts against the second hinge arm 134 to limit the rotation of the first hinge arm 133 relative to the second hinge arm 134.

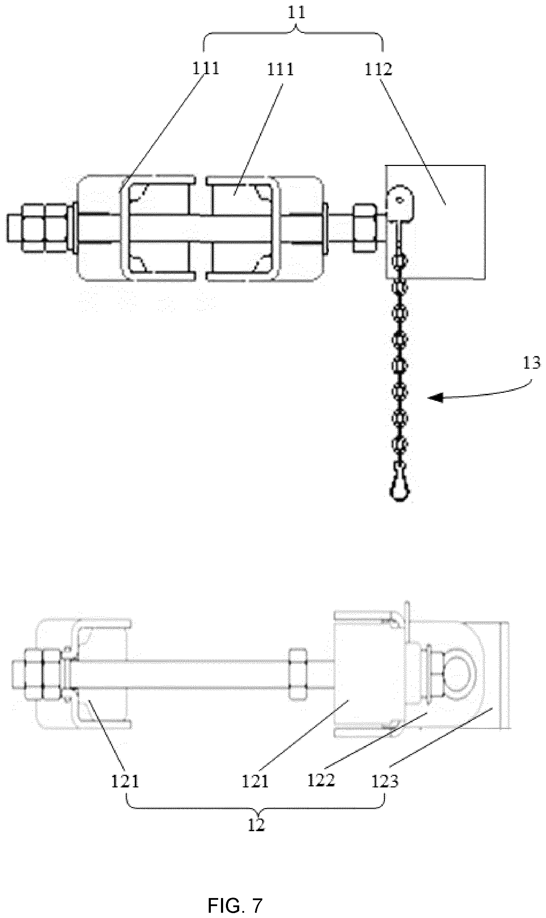

Referring to FIG. 7, a fifth embodiment of the present application relates to a fixing device 10 for fixing a communication device, and the main difference between the fifth embodiment and the above fourth embodiment of the present application is that the limiting mechanism 13 is a chain, and an end of the limiting mechanism 13 is fixed to the upper mounting member 11 and another end of the limiting mechanism 13 is fixed to the upper end of the communication device. After the upper mounting member 11 cannot be fixedly connected with the communication device and the limiting mechanism 13 is unfolded (i.e., the chain is straightened), the limiting mechanism 13 pulls the upper end of the communication device to limit the fixing portion 123 from continuing to rotate relative to the hinge portion 122.

It should be noted that in other embodiments, the limiting mechanism 13 may also be a telescopic member (e.g., a telescopic rod, etc.), and the telescopic member includes a first fixing end fixed to the upper mounting member 11 and a second fixing end fixed to the upper end of the communication device, and after the upper mounting member 11 cannot be fixedly connected with the communication device and the telescopic member is fully unfolded, since the first fixing end of the telescopic member is fixed to the upper mounting member 11 and the second fixing end of the telescopic member is fixed to the upper end of the communication device, so that the telescopic member can pull the upper end of the communication device, to limit the fixing portion 123 and the communication device fixed to the fixing portion 123 from continuing to rotate relative to the hinge portion 122.

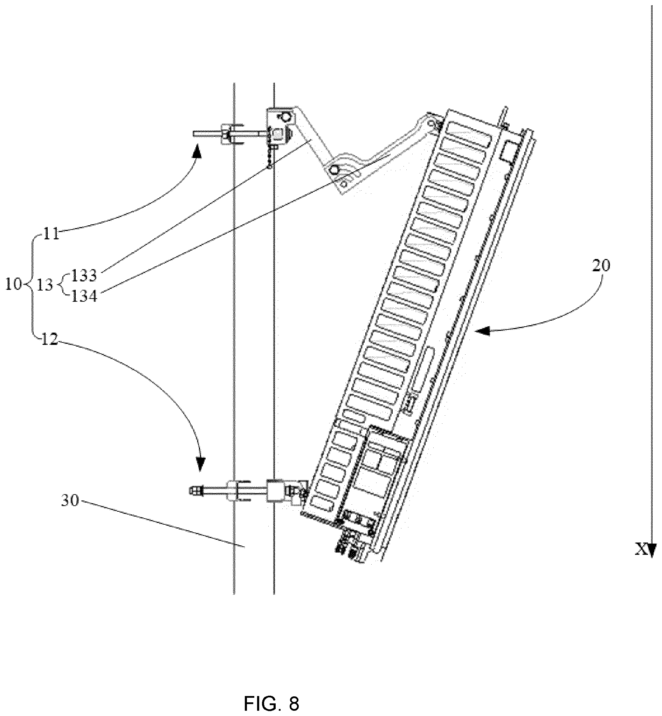

Referring to FIG. 8, while continuing to refer to FIG. 5 and FIG. 6, a sixth embodiment of the present application relates to a communication apparatus including a fixing device 10 for fixing a communication device provided in the above fourth embodiment, and a communication device 20 fixed to the fixing device 10, the upper mounting member 11 is fixed to the upper end of the communication device 20, and the lower mounting member 12 is fixed to the lower end of the communication device 20, the lower mounting member 12 is located below the upper mounting member 11 in a direction of gravity (i.e., X as shown).

Specifically, when the upper mounting member 11 cannot be fixedly connected with the communication device 20 and the fixing portion 123 rotates relative to the hinge portion 122, the distance between the upper mounting member 11 and the upper end of the fixing device 10 increases, so that the first hinge arm 133 rotates relative to the second hinge arm 134, and when the positioning axis 136 abuts against the end of the circular arc-shaped slotted hole 137, the positioning portion 134 limits the first hinge arm 133 from continuing to rotate relative to the second hinge arm 134, to thus limit the fixing portion 123 from continuing to rotate relative to the hinge portion 122, the impact force transferred by the communication device 20 to the lower mounting member 12 is reduced, to avoid that the lower mounting member 12 cannot be fixedly connected to the communication device 20.

In the embodiment, when a fixed place of the holding bar 30 for fixing the communication device 20 is deformed, because the fixing portion 123 is hinged to the hinge portion 122, when the upper mounting member 11 is fixedly connected to the communication device 20, the communication device 20 is provided inclinedly relative to the direction of gravity to adapt to the deformed holding bar 30.

It should be noted that in other alternative embodiments, the communication apparatus may also employ any one of the fixing devices 10 in the first embodiment, the second embodiment, the fourth embodiment and the fifth embodiment above, so that when the upper mounting member 11 cannot be fixedly connected with the communication device 20 and the fixing portion 123 rotates the preset angle relative to the hinge portion 122, the limiting mechanism 13 limits the fixing portion 123 from continuing to rotate relative to the hinge portion 122. Further, in one embodiment, the communication device employs at least two of the fixing devices 10 provided in the first embodiment to the fifth embodiment above, so that when the upper mounting member 11 cannot be fixedly connected with the communication device 20 and the fixing portion 123 rotates the preset angle relative to the hinge portion 122, the limiting mechanism 13 limits the fixing portion 123 from continuing to rotate relative to the hinge portion 122.

It will be understood by those skilled in the art that each of the above embodiments is a specific embodiment for realizing the present application, and in practical application, various changes can be made to it in form and details without deviating from the scope of the present application.

## Claims

1. A fixing device for fixing a communication device, **characterizing by** comprising:
an upper mounting member fixed to an upper end of the communication device;
a lower mounting member fixed to a lower end of the communication device and mounted below the upper mounting member; and
at least one limiting mechanism fixed to the upper mounting member and/or the lower mounting member;
wherein the lower mounting member comprises a fixing portion fixed to the lower end of the communication device and a hinge portion hinged to the fixing portion; and
the limiting mechanism is configured to limit the fixing portion from continuing to rotate relative to the hinge portion in response to that the upper mounting member is not fixedly connected to the communication device and the fixing portion rotates a preset angle relative to the hinge portion along a preset path, wherein the preset angle is greater than 0°and less than 140°.

2. The fixing device for fixing the communication device according to claim 1, wherein in response to that the fixing portion rotates relative to the hinge portion along the preset path, the limiting mechanism abuts against the fixing portion, the hinge portion or the lower end of the communication device to limit the fixing portion from continuing to rotate relative to the hinge portion.

3. The fixing device for fixing the communication device according to claim 2, wherein the limiting mechanism is a bending portion that bends and extends from the hinge portion in a direction away from the upper mounting member and is provided in the preset path;
in response to that the upper mounting member is not fixedly connected to the communication device and the fixing portion rotates relative to the hinge portion along the preset path, the bending portion abuts against the fixing portion or the lower end of the communication device to limit the fixing portion from continuing to rotate relative to the hinge portion.

4. The fixing device for fixing the communication device according to claim 2, wherein the limiting mechanism is a spacer that is fixed at a hinge joint of the fixing portion with the hinge portion and is provided in the preset path;
in response to that the upper mounting member is not fixedly connected to the communication device and the fixing portion rotates relative to the hinge portion along the preset path, the spacer abuts against the fixing portion or the lower end of the communication device to limit the fixing portion from continuing to rotate relative to the hinge portion.

5. The fixing device for fixing the communication device according to claim 2, wherein the limiting mechanism is a protrusion that is provided on the fixing portion and the preset path;
in response to that the upper mounting member is not fixedly connected to the communication device and the fixing portion rotates relative to the hinge portion along the preset path, the protrusion abuts against the hinge portion to limit the fixing portion from continuing to rotate relative to the hinge portion.

6. The fixing device for fixing the communication device according to any one of claims 1 to 5, wherein the limiting mechanism is a folding member, the limiting mechanism comprises a first fixing end fixed to the upper mounting member and a second fixing end fixed to the upper end of the communication device; and
the limiting mechanism is configured to limit the fixing portion from continuing to rotate relative to the hinge portion after the upper mounting member is not fixedly connected to the communication device and the limiting mechanism is unfolded.

7. The fixing device for fixing the communication device according to claim 6, wherein the limiting mechanism comprises a first hinge arm and a second hinge arm;
an end of the first hinge arm is hinged to the upper mounting member, another end of the first hinge arm is hinged to an end of the second hinge arm, and another end of the second hinge arm is hinged to the upper end of the communication device.

8. The fixing device for fixing the communication device according to claim 7, wherein the limiting mechanism further comprises a positioning portion provided on the first hinge arm and/or the second hinge arm;
the positioning portion is configured to limit the first hinge arm from continuing to rotate relative to the second hinge arm after the first hinge arm rotates relative to the second hinge arm.

9. The fixing device for fixing the communication device according to any one of claims 1 to 8, wherein the limiting mechanism is a chain, an end of the chain is fixed to the upper mounting member and another end of the chain is fixed to the upper end of the communication device.

10. The fixing device for fixing the communication device according to any one of claims 1 to 9, wherein the preset angle is greater than 0°and less than 60°.

11. The fixing device for fixing the communication device according to claim 10, wherein the preset angle is 20°.

12. A communication apparatus, **characterizing by** comprising:
the fixing device for fixing the communication device according to any one of claims 1 to 11; and
a communication device fixed to the fixing device,
wherein the upper mounting member is fixed to the upper end of the communication device, the lower mounting member is fixed to the lower end of the communication device, and the lower mounting member is located below the upper mounting member in a direction of gravity.

13. The communication apparatus according to claim 12, wherein the communication device is provided inclinedly relative to the direction of gravity in response to that the upper mounting member is fixedly connected to the communication device.
